# EUROPEAN PATENT APPLICATION

(11) **EP 4 083 811 A1**
(43) Date of publication of application: **02.11.2022**
(21) Application number: 20906427.8
(22) Date of filing: 17.12.2020
(51) Int. Cl.: G06F 16/33

(54) **KNOWLEDGE GRAPH QUERY METHOD, ELECTRONIC DEVICE, AND STORAGE MEDIUM**

(30) Priority: 23.12.2019 CN 201911336981
(71) Applicant: ZTE Corporation, Shenzhen, Guangdong 518057 (CN)
(72) Inventor: ZHU, Shizheng, Shenzhen, Guangdong 518057 (CN)
(74) Representative: Petraz, Gilberto Luigi
(86) International application number: PCT/CN2020/137306
(87) International publication number: WO 2021/129515

(57) **Abstract**

A knowledge graph query method, an electronic device, and a storage medium. The query method comprises: if an answer to an original question cannot be directly queried in a knowledge graph, determining entity words of the original question; performing entity word preprocessing on the original question, and according to a pre-stored equivalent sentence of which the similarity with the original question subjected entity word preprocessing is greater than a preset threshold, determining attribute words of the original question; and according to the determined entity words and attribute words, querying an answer to the original question, and feeding same back.

## Description

### Cross-reference to Related Applications

The disclosure claims the priority of Chinese patent application No. 201911336981.6 filed on December 23, 2019, the entirety of which is incorporated herein by reference.

### Field of the Invention

Embodiments of the disclosure relate to the technical field of communications, and in particular, to a knowledge graph query method, an electronic device, and a storage medium.

### Background of the Invention

With the development of communication technologies, the development of artificial intelligence has gradually become mature, and the intelligent questioning-answering is a relatively basic function. In a questioning-answering system based on a knowledge graph, the knowledge graph is constructed based on relatively standard and short words (an entity word and an attribute word) and attribute words may be similar to each other, for example, attribute words "method of activating" and attribute words "condition of activating". Moreover, a user may use a relatively colloquial word (for example, for the attribute words "method of activating", the user may ask "how to activate") in a question. If the questioning-answering system lacks large-scale linguistic data for machine learning and training, there may be a circumstance where no answer is searched out based on the knowledge graph. A general solution is to directly expand a selected questioning-answering pair based on sentence pattern templates of equivalent sentences of a certain questioning-answering pair and add a relatively colloquial equivalent sentence to a corresponding attribute, so as to improve a success rate of answering a question of the user by increasing equivalent sentences of the questioning-answering pair.

### Summary of the Invention

Some embodiments of the disclosure provide a knowledge graph query method, including: querying an answer to an original question in a pre-established knowledge graph; determining an entity word of the original question if no answer to the original question is found; performing entity word preprocessing on the original question, acquiring similarities of respective pre-stored equivalent sentences in the knowledge graph with the original question subjected to the entity word preprocessing, and determining an attribute word of the original question according to a pre-stored equivalent sentence which has a similarity that is greater than a preset threshold with the original question subjected to the entity word preprocessing; and querying the answer to the original question in the knowledge graph according to the entity word and the attribute word of the original question, and feeding the answer found back.

Some embodiments of the disclosure provide an electronic device, including: at least one processor; and a memory communicatively connected to the at least one processor. The memory stores an instruction executable by the at least one processor, and the instruction is executed by the at least one processor so as to enable the at least one processor to implement the above knowledge graph query method.

Some embodiments of the disclosure provide a computer readable storage medium, which stores a computer program, the computer program, when executed by a processor, implementing the above knowledge graph query method.

### Brief Description of the Drawings

One or more embodiments are exemplarily described with reference to corresponding drawings, and the exemplary description does not constitute any limitation on the embodiments.
Fig. 1 is a flowchart of a knowledge graph query method according to a first embodiment of the disclosure;
Fig. 2 is a flowchart of a knowledge graph query method according to a second embodiment of the disclosure;
Fig. 3 is a schematic diagram of a structure of an electronic device according to a third embodiment of the disclosure.

### Detailed Description of the Embodiments

In order to make the objective, technical solutions, and advantages of embodiments of the disclosure clearer, respective embodiments of the disclosure will be elaborated below with reference to the drawings. Those of ordinary skills in the art may understand that many technical details are put forward in order to make the disclosure better understood by the reader. However, even without these technical details and based on various changes and modifications on the following respective embodiments, technical solutions of the disclosure can also be implemented. Division of the following respective embodiments is for the convenience of description and should not constitute any definition on specific implementation manners of the disclosure, and respective embodiments may be combined and referred with each other under the premise of no contradiction.

The inventor has found that, when adding an equivalent sentence is performed, if a colloquial equivalent sentence is added to a selected questioning-answering pair according to a set template, a possibility of successfully finding an answer to a question put forward by a user in a questioning-answering process is still relatively low, and the accuracy of the answer is relatively low.

Based on this, some embodiments of the disclosure provide a knowledge graph query method, an electronic device, and a storage medium, so as to improve a success rate of finding an answer to an original question input by a user and the accuracy of the answer found, in the process of the intelligent questioning-answering.

A first embodiment of the disclosure relates to a knowledge graph query method. In the embodiment, an answer to an original question is queried according to a pre-established knowledge graph; if no answer to the original question is found, an entity word of the original question is determined according to the knowledge graph; entity word preprocessing is performed on the original question, similarities of pre-stored equivalent sentences in the knowledge graph with the original question subjected to the entity word preprocessing being acquired, and an attribute word of the original question being determined according to a pre-stored equivalent sentence which has a similarity that is greater than a preset threshold with the original question subjected to the entity word preprocessing; the answer to the original question is queried in the knowledge graph according to the entity word and the attribute word of the original question, and the answer found is fed back. When the answer to the original question cannot be determined directly, the entity word of the original question is acquired, entity word preprocessing being performed on the original question, the attribute word of the original question being determined according to the pre-stored equivalent sentence which has the similarity that is greater than the preset threshold with the processed original question, so that the pre-stored equivalent sentence is applied, by a semantic relationship, to a process of determining the attribute word of the original question which has a sematic meaning that is similar to that of the pre-stored equivalent sentence, thereby improving a probability of determining the attribute word of the original question and the accuracy, further improving a probability of finding the answer when querying and feeding back the answer to the original question are performed according to the entity word and the attribute word, and ensuring the accuracy of the answer found.

Implementation details of the knowledge graph query method in the embodiment are described specifically below, and the following contents are only implementation details provided for the convenience of understanding and are not a must of the embodiment.

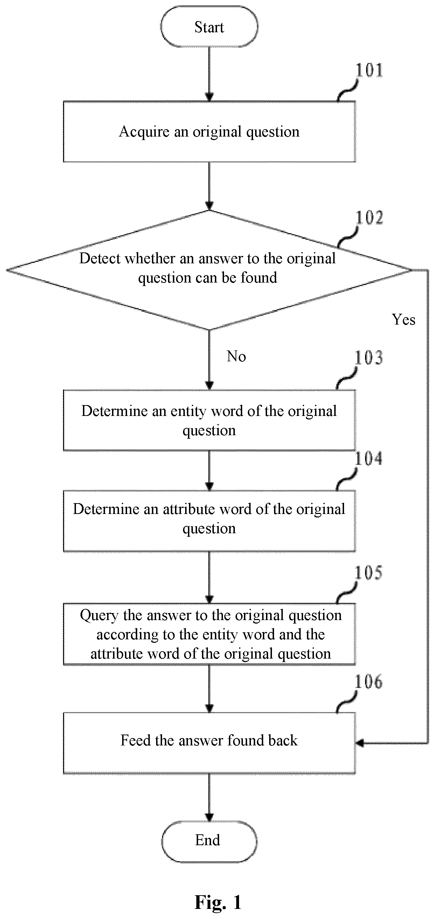

A specific process of a knowledge graph query method in the embodiment is shown in Fig. 1, and specifically includes the following steps.

At step 101, an original question is acquired.

In some embodiments, when intelligent questioning-answering is performed, a terminal parses information input by a user by voice recognition or text recognition so as to determine the original question input by the user.

At step 102, whether an answer to the original question can be found is detected. The process enters step 106 if the answer to the original question can be found, and the process enters step 103 if the answer to the original question cannot be found.

In some embodiments, after the original question of the user is acquired, the terminal queries the answer to the original question in the pre-established knowledge graph and tries to acquire the answer to the original question. If an entity word and an attribute word of the original question which are unique can be acquired at the same time, it can be determined that the answer to the original question can be found. The entity word of the original question refers to an entity object included in the original question, and the attribute word of the original question refers to a specific purpose directed at the entity object included in the original question. For example, the original question input by the user is "how to clear dust for a notebook computer?". Entity words of the original question refer to the entity object "notebook computer" included in the original question. The attribute word of the original question refers to the specific purpose "method of clearing dust" directed at the entity object "notebook computer" included in the original question. The answer to the original question is queried according to the entity word and the attribute word of the original question that are acquired, and the process enters step 106 for feeding back the answer. If the entity word and the attribute word of the original question which are unique cannot be acquired at the same time, it can be determined that no answer to the original question can be found, and the process enters step 103.

At step 103, the entity word of the original question is determined.

In some embodiments, when the answer to the original question cannot be found directly, determining the entity word of the original question is performed according to entity words of respective pre-stored equivalent sentences in the knowledge graph. Whether the original question includes an entity word pre-stored in the knowledge graph is detected, and the entity word pre-stored in the knowledge graph that is included in the original question is used as the entity word of the original question.

In one example, when determining the entity word of the original question is performed according to the entity word pre-stored in the knowledge graph, whether an entity word matching the original question exists among pre-stored entity words in the knowledge graph is detected. The pre-stored entity words are the entity words of respective pre-stored equivalent sentences. If the entity word matching the original question exists among the pre-stored entity words, the pre-stored entity word matching the original question is used as the entity word of the original question. If no entity word matching the original question exists among the pre-stored entity words, an enquiring sentence is output. The original question is updated according to received enquiring feedback, and whether an entity word matching the original question exists among the pre-stored entity words is detected again. The entity word of the original question is determined according to matching degrees of the pre-stored entity words in the knowledge graph with the original question, so as to ensure that the entity word of the original question can be found in the knowledge graph. If the entity word cannot be determined directly, the original question is updated according to the enquiring feedback, and detecting the entity word is performed again, so as to improve a probability of identifying the entity word of the original question as much as possible.

For example, the terminal acquires an original question "how to perform binding to the Alipay". When matching is performed on the original question according to pre-stored entity words in the knowledge graph, no entity word matching the original question is found. That is, a specific object on which activating the online banking is performed in the original question cannot be acquired. In this case, an enquiring sentence is output to the user via an interaction interface to remind the user of inputting a question again or performing supplementation on the original question, so as to acquire the question input again by the user or supplementation information to the original question. After the original question in the terminal is updated, matching and determining of the entity word can be performed again. For example, the user performs supplementation to the original question, and the original question is changed to "how to bind a bank card to the Alipay" according to the supplementation information of the user. In this case, whether an entity word matching the original question exists among the pre-stored entity words in the knowledge graph is detected again. When it is detected that words "bank card" in the original question exist among the pre-stored entity words in the knowledge graph, the words "bank card" are used as entity words of the original question "how to bind a bank card to the Alipay".

At step 104, an attribute word of the original question is determined.

In some embodiments, after the entity word of the original question is determined, entity word processing is performed on the original question according to the entity word of the original question, so as to acquire similarities of pre-stored equivalent sentences in the knowledge graph with the original question subjected to the entity word preprocessing. The attribute word of the original question is determined according to a pre-stored equivalent sentence which has a similarity that is greater than a preset threshold with the original question subjected to the entity word preprocessing. In some embodiments, the preset threshold may be 70%, 80%, 90%, 95%, and the like.

In an example, after the entity word of the original question is determined, a target entity word is determined according to the entity words of respective pre-stored equivalent sentences. The target entity word is an entity word, among the entity words of respective pre-stored equivalent sentences, which has a similarity that is greater than a first preset threshold with the entity word of the original question. The entity word of the original question is replaced by the target entity word, so as to generate a derived question of the original question. A target pre-stored equivalent sentence is determined according to similarities of the derived question with respective pre-stored equivalent sentences. The target pre-stored equivalent sentence is a pre-stored equivalent sentence, among respective pre-stored equivalent sentences, which has a similarity that is greater than a second preset threshold with the derived question. The attribute word of the original question is determined according to an attribute word of the target pre-stored equivalent sentence. The entity word in the original question is replaced by means of similarities of the entity word of the original question with the entity words of pre-stored equivalent sentences, and then the attribute word of the original question is determined according to the attribute word of the target pre-stored equivalent sentence, so as to determine the attribute word of the original question by means of an existing attribute word of a pre-stored equivalent sentence, thereby improving the probability of determining the attribute word of the original question and further improving the possibility of successfully finding the answer to the original question.

For example, an original question input by the user is "a newly bought Mercedes-Benz has a malfunction, and how to safeguard rights?". By means of matching degrees of pre-stored entity words in the knowledge graph with the original question, it is determined that an entity word of the original question is "Mercedes-Benz". Then, similarities of the entity word of the original question with the pre-stored entity words are calculated according to a semantic similarity algorithm, so as to obtain pre-stored entity words "Mercedes-Benz" which have a semantic similarity that is greater than 85% with the entity word of the original question. The entity words "Mercedes-Benz" are used as target entity words, and the entity word in the original question is replaced by the target entity words, so as to generate a derived question of the original question, i.e., "a newly bought Mercedes-Benz has a malfunction, and how to safeguard rights?". After that, sematic similarities of the derived question with pre-stored questions in the knowledge graph are calculated, and an equivalent sentence "a newly bought Mercedes-Benz has a malfunction, and how to safeguard rights?", which has a similarity of 75% with the derived question, is obtained from an existing entity-attribute pair "Changan Auto-right safeguarding channel". Accordingly, attribute words "right safeguarding channel" of the target pre-stored equivalent sentence are used as attribute words of the original question.

In actual application, specific values of the first preset threshold and the second preset threshold may be set according to actual circumstances, and the embodiment does not make any limitation on setting of the preset thresholds. In some examples, the first preset threshold and the second preset threshold may be set to be 70%, 80%, 90%, 95%, and the like.

In another example, when determining the target pre-stored equivalent sentence is performed according to the similarities of the derived question with respective pre-stored equivalent sentences, if no pre-stored equivalent sentence which has a similarity that is greater than the second preset threshold with the derived question is detected, all pre-stored equivalent sentences containing the target entity word are output; and the target pre-stored equivalent sentence is determined according to received feedback of the user. By performing enquiring for a second time to the user according to pre-stored equivalent sentences containing the target entity word and determining the target pre-stored equivalent sentence according to the feedback of the user, accurately acquiring a purpose of the user is ensured; and by determining the purpose of the user based on the enquiring performed for the second time, the possibility of finding the answer to the original question and the accuracy of the answer found are improved.

For example, the original question input by the user is "a newly bought Mercedes-Benz has a malfunction, and how to safeguard rights?". By performing matching with the pre-stored entity words in the knowledge graph, it is determined that the target entity words are "Mercedes-Benz". After replacing the entity word is performed, no pre-stored equivalent sentence which has a semantic similarity that is greater than 75% with the derived question is detected. At this time, it is detected that pre-stored equivalent sentences containing the target entity words are "a newly bought Mercedes-Benz has a problem, and how to safeguard rights" and "a newly bought Mercedes-Benz has a problem, and which channels of safeguarding rights can be selected". Then, an enquiring sentence is output to the user according attribute words of the two pre-stored equivalent sentences, and the user could select the pre-stored equivalent sentence whose contents the user wants to know. If the user selects the channels of safeguarding rights, the sentence "a newly bought Mercedes-Benz has a problem, and which channels of safeguarding rights can be selected" is used as the target pre-stored equivalent sentence, and attribute words "channels of safeguarding rights" of the target pre-stored equivalent sentence are used as the attribute words of the original question.

At step 105, the answer to the original question is queried according to the entity word and the attribute word of the original question.

In some embodiments, after acquiring the entity word and the attribute word of the original question input by the user, the terminal queries the answer to the original question in the knowledge graph according to the entity word and the attribute word of the original question.

At step 106, the answer found is fed back.

In some embodiments, the terminal feeds back the answer to the original question to the user via the interaction interface, for example by means of voice broadcasting, video broadcasting, text displaying, according to the answer to the original question that is searched out.

In this way, the embodiment provides a knowledge graph query method. When the answer to the original question cannot be found directly, the entity word of the original question is determined according to matching degrees of the entity words of pre-stored equivalent sentences in the knowledge graph with the original question. Then, entity word preprocessing is performed on the original question, and the attribute word of the original question is determined according to the pre-stored equivalent sentence which has a similarity that is greater than the preset threshold with the processed original question. After that, querying and feeding back the answer are performed according to the entity word and the attribute word of the original question. The attribute word of the original question is determined by means of the target pre-stored equivalent sentence, so that the entity word and the attribute word of the original question can be determined according to the existing equivalent sentence, thereby improving the probability of determining the entity word and the attribute word of the original question and further improving the possibility of successfully finding the answer to the original question.

In other words, in the embodiment, in the process of performing the questioning-answering, when the answer to the original question cannot be found in the knowledge graph directly, the entity word of the original question is determined. Entity word preprocessing is performed on the original question, and then the attribute word of the original question is determined according to the pre-stored equivalent sentence which has a similarity that is greater than the preset threshold with the processed original question. After that, querying and feeding back the answer are performed according to the entity word and the attribute word of the original question. The pre-stored equivalent sentence in the knowledge graph is applied, by a semantic relationship in the knowledge graph, to a process of determining the attribute word of the original question which has a sematic meaning that is similar to that of the pre-stored equivalent sentence, thereby improving a probability of determining the attribute word of the original question and the accuracy of the determined attribute word. Then, querying and feeding back the answer to the original question are performed according to the entity word and the attribute word that are determined, so as to improve the success rate of finding the answer to the original question and the accuracy of the answer found.

A second embodiment of the disclosure relates to a knowledge graph query method. The second embodiment is roughly the same as the first embodiment. In the second embodiment, in a process of determining an entity word of an original question, if the entity word of the original question cannot be determined after multiple times of enquiring are performed, no answer being found is fed back directly, so as to avoid multiple times of meaningless enquiring and improve the querying efficiency. When determining an attribute word of the original question is performed, entity words of pre-stored equivalent sentences and the entity word of the original question are removed first, and then a target question is determined according to similarities of questions whose entity words are removed, so as to avoid an influence of the entity words on determining the similarities of the questions. Then, the attribute word of the original question is determined according to an attribute word of the target question, and querying and feeding back the answer are performed according to the attribute word and the entity word of the original question, so that all pre-stored equivalent sentences are applied to the process of determining the attribute word and the entity word of the original question. After a target pre-stored equivalent sentence is determined, an equivalent sentence of the original question is generated according to the target pre-stored equivalent sentence, thereby improving a generalization capability of an equivalent sentence in a knowledge graph and avoiding limitations when equivalent sentence generalization is performed according to a fixed sentence pattern. The determined equivalent sentence of the original question is added to the knowledge graph, so that the knowledge graph is expanded automatically and efficiently.

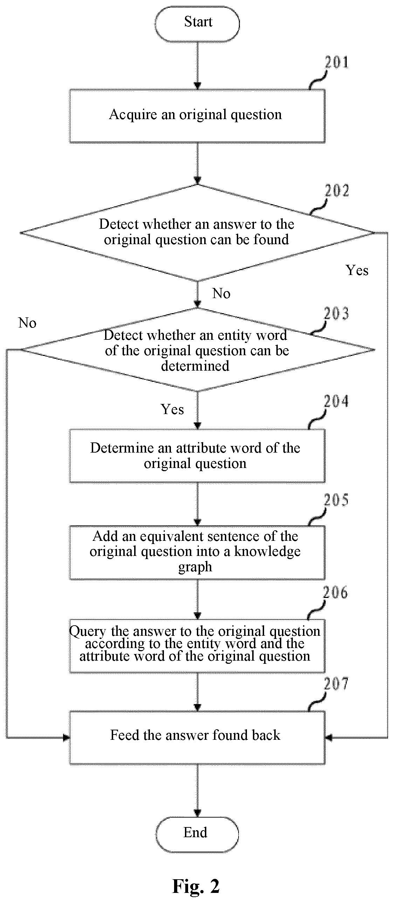

A specific process of a knowledge graph query method in the embodiment is shown in Fig. 2, and specifically includes the following steps.

At step 201, an original question is acquired.

At step 202, whether an answer to the original question can be found is detected. The process enters step 207 if the answer to the original question can be found, and the process enters step 203 if no answer to the original question can be found.

Step 201 and step 202 in the second embodiment are similar to step 101 and step 102 in the first embodiment, and details are not repeated herein.

At step 203, whether an entity word of the original question can be determined is detected. The process enters step 204 if the entity word of the original question can be determined, and the process enters step 207 if the entity word of the original question cannot be determined.

In some embodiments, when the answer to the original question cannot be found directly, the terminal performs matching on the original question according to entity words of pre-stored equivalent sentences in the knowledge graph, tries to determine the entity word of the original words, performs enquiring to the user via an interaction interface when the entity word of the original question cannot be determined directly, updates the original question according to feedback acquired from the enquiring, performs detection again on the entity word of the updated original question, and detects whether a current number of times of outputting an enquiring sentence reaches a preset threshold before performing enquiring to the user. If the current number of times of outputting the enquiring sentence does not reach the preset threshold, outputting the enquiring sentence is performed again until the entity word of the original question is determined, and then the process enters step 204. If the current number of times of outputting the enquiring sentence reaches the preset threshold, the process enters step 207, and a querying result indicating that no answer is found is output. A probability of determining the entity word of the original question is improved by performing multiple times of enquiring; and when there are too many times of enquiring, a result that no answer to the original question is found is output, so as to avoid performing multiple times of meaningless querying and improve the efficiency of feeding back.

In actual application, a value of the preset threshold of the times of enquiring may be set according to actual circumstances and needs, and the embodiment does not make any limitation on setting of the preset threshold. In some examples, the value of the preset threshold may be twice, three times, four times, five times, and the like.

At step 204, an attribute word of the original question is determined.

In some embodiments, after the entity word of the original question is determined, entity preprocessing is performed on the original question according to the entity word of the original question. Similarities of pre-stored equivalent sentences in the knowledge graph with the original question subjected to the entity word preprocessing are acquired, and the attribute word of the original question is determined according to a pre-stored equivalent sentence which has a similarity that is greater than a preset threshold with the original question subjected to the entity word preprocessing.

In an example, after the entity word of the original question is determined, the entity word of the original question is removed to generate a derived question of the original question. Entity words of respective pre-stored equivalent sentences are removed, and a target pre-stored equivalent sentence is determined according to similarities of the derived question with respective pre-stored equivalent sentences whose entity words are removed. The target pre-stored equivalent sentence is a pre-stored equivalent sentence, among respective pre-stored equivalent sentences whose entity words are removed, which has a similarity that is greater than a second preset threshold with the derived question. The attribute word of the original question is determined according to an attribute word of the target pre-stored equivalent sentence. By removing the entity word of the original question and the entity words of the pre-stored equivalent sentences, an influence of the entity words on sematic similarities of questions are avoided, and it is ensured that the target equivalent sentence corresponding to the derived question can be determined accurately. Then, the attribute word of the original question is determined according to an attribute word of the target equivalent sentence, thereby improving a probability of determining the attribute word of the original question and further improving a possibility of finding the answer to the original question.

For example, an original question input by the user is "an iptv registration has been completed, and how a person himself/herself activates it?". After parsing the original question based on entity words of pre-stored equivalent sentences in the knowledge graph, the terminal acquires an entity word of the original question, i.e., "iptv". The terminal removes the entity word in the original question so as to obtain a derived question of the original question, i.e., "a registration has been completed, and how a person himself/herself activates it?". Then, entity words of all pre-stored equivalent sentences in the knowledge graph are removed. Semantic similarities of the derived question with respective pre-stored equivalent sentences whose entity words are removed are calculated by a sematic similarity algorithm, so as to detect whether there is a target pre-stored equivalent sentence which has a similarity that is greater than 70% with the derived question. After performing similarity calculation, a pre-stored equivalent sentence "a fixed-line telephone registration has been completed, and how a person himself/herself activates it?" on an entity-attribute pair "fixed-line telephone-activating method", which has a similarity with the derived question that is greater than 70% after the entity word is removed, is obtained. Then, the sentence "a fixed-line telephone registration has been completed, and how a person himself/herself activates it?" is used as the target pre-stored equivalent sentence, and attribute words "activating method" in the target pre-stored equivalent sentence are used as attribute words of the original question.

In actual application, the second preset threshold may be set according to actual circumstances, and the embodiment does not make any limitation on a specific value of the second preset threshold. In some examples, the second preset threshold may be set to be 70%, 80%, 90%, 95%, and the like.

In another example, after the entity word preprocessing is performed on the original question according to the entity word of the original question, whether a pre-stored equivalent sentence which has a similarity that is greater than the second preset threshold with the original question subjected to the entity word preprocessing is detected. If multiple pre-stored equivalent sentences, each of which has a similarity that is greater than the second preset threshold with the derived question, are detected, a pre-stored equivalent sentence which has a similarity that is the greatest with the derived question is used as the target pre-stored equivalent sentence. By selecting the pre-stored equivalent sentence which has a similarity that is the highest as the target pre-stored equivalent sentence, a matching degree of the attribute word obtained with the original question is ensured. For example, the original question is "an iptv registration has been completed, and how a person himself/herself activates it?", and it is detected that there are two pre-stored equivalent sentences, each of which has a similarity that is greater than 70% with the derived question of the original question. Pre-stored equivalent sentence 1 is "a fixed-line telephone registration has been completed, and how a person himself/herself activates it?", and has a similarity of 85% with the derived question after the entity word is removed. Pre-stored equivalent sentence 2 is "a bank card registration has been completed, and what are conditions for activating the credit card?", and has a similarity of 78% with the derived question after the entity word is removed. Then, pre-stored equivalent sentence 1 is chosen as the target pre-stored equivalent sentence, and attribute words "activating method" of the target pre-stored equivalent sentence are used as attribute words of the original question.

At step 205, an equivalent sentence of the original question is added into the knowledge graph.

In some embodiments, after a target pre-stored question is determined, an equivalent sentence of the original question is generated according to the target pre-stored equivalent sentence, and the equivalent sentence of the original question is added into the knowledge graph. By determining the equivalent sentence of the original question according to the target pre-stored equivalent sentence, applying existing pre-stored equivalent sentences in a process of determining the equivalent sentence of the original question is realized, which improves the generalization capability of the equivalent sentence, and limitations when an equivalent sentence is added according to a fixed sentence pattern template are avoided. By adding a determined equivalent sentence into the knowledge graph, the efficiency of expanding the knowledge graph is improved.

In an example, after the target pre-stored question is determined, generalization is performed on the target pre-stored equivalent sentence in combination with the entity word of the original question, so as to determine the equivalent sentence of the original question. Then, an entity-attribute pair corresponding to the equivalent sentence is determined according to an entity word and an attribute word of the equivalent question of the original question. The acquired equivalent sentence is added to an equivalent sentence storage section of the entity-attribute pair so as to automatically expand the pre-stored equivalent sentences in the knowledge graph, and a mapping relationship between the equivalent sentence and the entity-attribute pair to which the equivalent sentence belongs is saved in the knowledge graph, so as to facilitate using of the equivalent sentence stored.

For example, an original question input by the user is "a newly bought Mercedes-Benz has a malfunction, and how to safeguard rights?". By performing matching with pre-stored entity words in the knowledge graph, it is determined that entity words are "Mercedes-Benz". A target pre-stored equivalent sentence "a newly bought Chang'an Auto has a problem, and how to safeguard rights?" is acquired according to similarities of questions after entity words are removed. Generalization is performed on the target pre-stored equivalent sentence in combination with the entity words "Mercedes-Benz" of the original question, so as to obtain an equivalent sentence of the original question, i.e., "a newly bought Mercedes-Benz has a problem, and how to safeguard rights?". Then, it is determined that an entity-attribute pair to which the equivalent sentence of the original question belongs is "Mercedes-Benz -process of safeguarding rights" according to the entity words "Mercedes-Benz" and attribute words "process of safeguarding rights" contained in the equivalent sentence. The equivalent sentence of the original question is stored in a corresponding storage section, and a mapping relationship of the equivalent sentence and the entity-attribute pair is saved.

At step 206, the answer to the original question is queried according to the entity word and the attribute word of the original question.

In some embodiments, after acquiring the entity word and the attribute word of the original question input by the user, the terminal queries the answer to the original question in the knowledge graph according to the entity word and the attribute word of the original question, so as to determine the answer to the original question.

At step 207, a querying result is fed back.

In some embodiments, after the terminal queries the answer to the original question, if no answer can be found according to the entity word and the attribute word of the original question or the entity word and the attribute word of the original question cannot be acquired, a sentence that the answer to the original question cannot be queried is output. If the answer to the original question can be directly found or the answer to the original question can be found according to the entity word and the attribute word, the answer to the original question that is found is output.

In this way, the second embodiment provides a knowledge graph query method. When querying the answer to the original question is performed, if the answer cannot be found directly, the entity word of the original question is determined. The target pre-stored equivalent sentence is determined by removing entity words of the pre-stored equivalent sentences and the entity word of the original question and according to similarities of processed questions, so as to further determine the attribute word of the original question. Querying of the answer is performed according to the entity word and the attribute word of the original question. The equivalent sentence of the original question is generated according to the target pre-stored equivalent sentence and the entity word of the original question, and the equivalent sentence of the original question is added into the knowledge graph. By determining the target pre-stored equivalent sentence according to the similarities of processed questions after the entity words are removed and determining the attribute word of the original question according to the attribute word of the target pre-stored equivalent sentence, applying existing equivalent sentences in the knowledge graph in the process of determining the attribute word of the original question is realized, which improves a probability of determining the attribute word of the original question. After the target pre-stored equivalent sentence is determined, the equivalent sentence of the original question is generated according to the target pre-stored question, and the equivalent sentence of the original question is automatically added into the knowledge graph, which improves the generalization capability of the equivalent sentence in the knowledge graph and the efficiency of expanding the knowledge graph. By selecting the equivalent sentence which has a similarity that is the highest among multiple equivalent sentences meeting the similarity requirement, the matching degree of the attribute word determined with the original question is ensured, and further the possibility of finding the answer to the original question and the accuracy of the answer found are improved.

The above steps of various methods are divided only for clear description. When a method is implemented, some steps may be combined into one step, or a step may be divided into multiple steps. As long as the same logic relationship is included, the division manners both fall into the protection scope of the disclosure. Adding an inessential modification or introducing an inessential design into an algorithm or a process without changing the core design of the algorithm or the process falls into the protection scope of the disclosure.

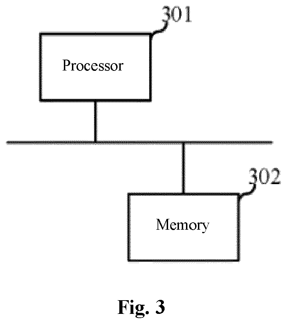

A third embodiment of the disclosure relates to an electronic device, as shown in Fig. 3. The electronic device includes: at least one processor; and a memory communicatively connected to the at least one processor. The memory stores an instruction executable by the at least one processor, and the instruction is executed by the at least one processor so as to enable the at least one processor to implement the above knowledge graph query method.

The memory and the processor are connected by a bus. The bus may include any number of interconnected buses and bridges, and connect various circuits of one or more processors and the memory. The bus may also connect various other circuits such as a peripheral device, a stabilizer, and a power management circuit. These are known in the art, and are not further described herein. A bus interface is provided between the bus and a transceiver. The transceiver may be an element and may also be multiple elements, for example multiple receivers and transmitters, and provide a unit for communicating with various other devices over a transmission medium. Data processed by the processor is transmitted over a wireless medium via an antenna, and the antenna also receives data and transmits the data to the processor.

The processor is in charge of managing the bus and general processing, and may also provide various functions, including timing, the peripheral interface, voltage adjustment, power source management, and other control functions. The memory may be used to store data used by the processor when operations are performed.

A fourth embodiment of the disclosure relates to a computer readable storage medium, which stores a computer program. The computer program, when executed by a processor, implements the above method embodiments.

That is, those skilled in the art may understand that, all or some steps of the above methods in the embodiments may be completed by using a program to instruct relevant hardware, the program being stored in a storage medium and including several instructions to enable a device (which may be a singlechip, a chip, and the like) or a processor to carry out all or some steps of the methods in various embodiments of the disclosure. The aforesaid storage medium includes various mediums that may store program codes, such as a USB flash disk, a mobile hard disk drive, a read-only memory (ROM), a random-access memory (RAM), a diskette or an optical disk.

Those of ordinary skills in the art may understand that, the above various embodiments are specific embodiments for implementing the disclosure. However, in actual application, various changes can be made in forms and details without departing from the spirit and the scope of the disclosure.

## Claims

1. A knowledge graph query method, comprising:
querying an answer to an original question in a pre-established knowledge graph;
determining an entity word of the original question if no answer to the original question is found;
performing entity word preprocessing on the original question, acquiring similarities of respective pre-stored equivalent sentences in the knowledge graph with the original question subjected to the entity word preprocessing, and determining an attribute word of the original question according to a pre-stored equivalent sentence which has a similarity that is greater than a preset threshold with the original question subjected to the entity word preprocessing; and
querying the answer to the original question in the knowledge graph according to the entity word and the attribute word of the original question, and feeding the answer found back.

2. The knowledge graph query method according to claim 1, wherein performing the entity word preprocessing on the original question, acquiring the similarities of respective pre-stored equivalent sentences in the knowledge graph with the original question subjected to the entity word preprocessing, and determining the attribute word of the original question according to the pre-stored equivalent sentence which has the similarity that is greater than the preset threshold with the original question subjected to the entity word preprocessing comprise:
determining a target entity word according to entity words of respective pre-stored equivalent sentences, wherein the target entity word is an entity word, among the entity words of respective pre-stored equivalent sentences, which has a similarity that is greater than a first preset threshold with the entity word of the original question;
replacing the entity word of the original question with the target entity word, so as to generate a derived question of the original question;
determining a target pre-stored equivalent sentence according to similarities of the derived question with respective pre-stored equivalent sentences, wherein the target pre-stored equivalent sentence is a pre-stored equivalent sentence, among the respective pre-stored equivalent sentences, which has a similarity that is greater than a second preset threshold with the derived question; and
determining the attribute word of the original question according to an attribute word of the target pre-stored equivalent sentence.

3. The knowledge graph query method according to claim 2, wherein determining the target pre-stored equivalent sentence according to the similarities of the derived question with respective pre-stored equivalent sentences comprises:
outputting all pre-stored equivalent sentences containing the target entity word if no pre-stored equivalent sentence which has a similarity that is greater than the second preset threshold with the derived question is detected; and
determining the target pre-stored equivalent sentence according to received feedback of a user.

4. The knowledge graph query method according to claim 1, wherein performing the entity word preprocessing on the original question, acquiring the similarities of respective pre-stored equivalent sentences in the knowledge graph with the original question subjected to the entity word preprocessing, and determining the attribute word of the original question according to the pre-stored equivalent sentence which has the similarity that is greater than the preset threshold with the original question subjected to the entity word preprocessing comprise:
removing the entity word of the original question, so as to generate a derived question of the original question;
removing entity words of respective pre-stored equivalent sentences, and determining a target pre-stored equivalent sentence according to similarities of the derived question with respective pre-stored equivalent sentences whose entity words are removed, wherein the target pre-stored equivalent sentence is a pre-stored equivalent sentence, among respective pre-stored equivalent sentences whose entity words are removed, which has a similarity that is greater than a second preset threshold with the derived question.
determining the attribute word of the original question according to an attribute word of the target pre-stored equivalent sentence.

5. The knowledge graph query method according to any of claims 2 to 4, wherein after determining the target pre-stored equivalent sentence, the method further comprises:
generating an equivalent sentence of the original question according to the target pre-stored equivalent sentence; and
adding the equivalent sentence of the original question into the knowledge graph.

6. The knowledge graph query method according to claim 1, wherein determining the entity word of the original question comprises:
detecting whether an entity word matching the original question exists among pre-stored entity words in the knowledge graph, wherein the pre-stored entity words are pre-stored entity words of respective pre-stored equivalent sentences;
using a pre-stored entity word matching the original question as the entity word of the original question if the entity word matching the original question exists among the pre-stored entity words; and
outputting an enquiring sentence if no entity word matching the original question exists among the pre-stored entity words, updating the original question according to received enquiring feedback, and detecting whether an entity word matching the original question exists among the pre-stored entity words in the knowledge graph again.

7. The knowledge graph query method according to claim 6, wherein before outputting the enquiring sentence, the method further comprises:
detecting whether a current number of times of outputting the enquiring sentence reaches a preset threshold;
performing outputting of the enquiring sentence again if the current number of times of outputting the enquiring sentence does not reach the preset threshold; and
outputting a querying result indicating that no answer is found if the current number of times of outputting the enquiring sentence reaches the preset threshold.

8. The knowledge graph query method according to any of claims 2 to 4, wherein determining the target pre-stored equivalent sentence comprises:
using a pre-stored equivalent sentence which has a similarity that is the greatest with the derived question as the target pre-stored equivalent sentence if multiple pre-stored equivalent sentences, each of which has a similarity that is greater than the second preset threshold with the derived question, are detected.

9. The knowledge graph query method according to claim 1, wherein the preset threshold is 70%, 80%, 90%, or 95%.

10. The knowledge graph query method according to claim 2, wherein the first preset threshold is 70%, 80%, 90%, or 95%.

11. The knowledge graph query method according to claim 2, wherein the second preset threshold is 70%, 80%, 90%, or 95%.

12. The knowledge graph query method according to claim 7, wherein the preset threshold is twice, three times, four times, or five times.

13. An electronic device, comprising:
at least one processor; and
a memory communicatively connected to the at least one processor, wherein the memory stores an instruction executable by the at least one processor, and the instruction is executed by the at least one processor so as to enable the at least one processor to implement the knowledge graph query method according to any of claims 1 to 12.

14. A computer readable storage medium, which stores a computer program, wherein the computer program, when executed by a processor, implements the knowledge graph query method according to any of claims 1 to 12.
